# EUROPEAN PATENT APPLICATION

(11) **EP 2 846 269 A1**
(43) Date of publication of application: **11.03.2015**
(21) Application number: 13183770.0
(22) Date of filing: 10.09.2013
(51) Int. Cl.: G06F 17/30

(54) **Connector for a BI (Business Intelligence) platform**

(71) Applicant: Value Lab S.r.l., 20123 Milano (IT)
(72) Inventor: Brugna, Marco, 15061 Arquata Scrivia (AL) (IT)
(74) Representative: Botti, Mario

(57) **Abstract**

The invention disclose a connector (1) for a BI (Business Intelligence) platform (5) including analytical data (6) and means (7) for processing the analytical data (6). The connector (1) is integrated in the BI platform (5) and is adapted to integrate in the BI platform (5) geographical information (3) of a GIS (Geographical Information System) platform (2); the connector (1) further integrates in the BI platform (5) means (4) of the GIS platform (2) for processing the geographical information (3). More particularly, the connector is adapted to link the analytical data (6) of the BI platform (5) to the integrated geographical information (3) of the GIS platform (2).

## Description

### Field of application

The present invention relates to a connector for a BI (Business Intelligence) platform, including means for storing and processing analytical data. The invention further relates to a method for connecting the BI platform.

### Prior art

A connector for a BI (Business Intelligence) platform is a server or a server application running between the BI platform and a second platform, more particularly a GIS platform, from which importing data. The server application includes a database Y wherein data from another database X of the GIS platform are imported and wherefrom data are converted and transmitted to a database Z of the BI platform. In other words, data stored in the BI platform are a duplicate of data imported in the converter from the GIS platform.

Data converted and stored in the BI platform are displayed and are associated to the analytical data stored in BI platform, to the advantage of decision makers. More particularly, geographical data stored in the GIS platform are imported in the database Y of the connector, in a set up phase of the server application, and when geographical data or geographical functions are required in the BI platform, the connector is requested to retrieve data from the database Y, without further communication to the GIS platform.

More particularly, GeoQlik is a known connector, running between and outside a GIS platform of esri® and the BI platform QlikView® of QlikTeck®. Data stored in a database of esri® are imported into a database of GeoQlik, and then are converted and transmitted to QlikView® for storage in an internal database and ultimately for displaying inside QlikView®, for instance as maps or geographical information indicating values associated to the territory. This information is available to decision makers inside the BI platform (QlikView®) together with analytical data of QlikView®.

The connector between GIS and BI platforms is a felt need because geo-processing functions, i.e. spatial analysis, mapping or web mapping, geo-editing of the GIS platform, on one side, are really useful if drawn close to data mining, statistics, predictive/prescriptive model, statistic reports, dashboards and discovery business of the BI platform, on the other side.

However, the known connectors, including GeoQlik, does not provide a real integration between platforms because use the GIS platform only as an initial source of data, and make complex and time consuming duplication and conversion of data, thus limiting an integrated usage of the geo-processing function and data already available in the GIS platform. In this respect, geo-processing functions, for instance functions for changing, zooming or reducing a map associated to data extracted from the GIS platform, are executed on duplicated data stored in the BI platform. Moreover, functions for editing, for instance to change a value in a map, are executed on duplicated data stored in the BI platform and not on data stored in the GIS platform. In other words, the geographical information displayed in the BI platform are only a copy of geographical information really stored in the GIS platform and each time a geographical information is required a communication with the server application in the converter is required.

The following example of loading a first map and modifying it as a second map clarifies the disadvantages of the known connector.

The server application of the connector retrieves data stored in a database of the GIS platform of esri® in a set up phase of the connector, stores the retrieved data in the internal database Y, converts data into a format readable to the BI platform, and finally send it to the BI platform; this last stores data internally as duplicate data and ultimately display it for geographical representation, for instance displaying it through a browser, as a first map.

When different data are required, for instance a second map or the first map in a greater detail, the connector is requested again from the BI platform to retrieve data internally stored in the database Y and converts again the data in the format readable to the BI platform, for ultimately storage inside the BI platform as further duplicated data and for a second graphical representation. The second graphical representation requires a new processing inside the BI platform on duplicated data and it is not a real geo-processing of data stored in the GIS platform. In other words, the map is drawn at the BI platform side on duplicated data. Moreover, a modification on the first map in the BI platform cannot be directly reported in the GIS platform of esri®, since it is executed on duplicated data and not on data really stored in the GIS platform of esri©.

In other words, the known connector is executed to import and convert data copied from the GIS platform, but it not adapted to bi-directionally link and integrate the two platforms.

Another limit of the above connector is that a management of huge amount of data is impossible due to the time involved in query, duplicating, converting and sending such data to the BI platform and then processing the duplicated data in the BI platform; for instance displaying maps with many layers or single layer maps including several duplicated data, or editing the duplicated data into the BI platform, involves unacceptable waiting time for the decision maker.

At last, since the known connector is strictly associated to the BI platform format, also the portability of the connector towards different operative system, for example Apple mobile, Android, etc is very limited or limited to a subset of functions adapted to manage only some geographical information.

The problem at the base of the present invention is that of providing a connector between the GIS platform, and more particularly for the GIS platform of esri®, and a BI platform for an improved integration between the platforms, extending the functions on the side of the BI platform to really work on geographical information stored in the GIS platform, and to bi-directionally update the geographical information of such GIS platform through the BI platform, thus providing an improved tool to decision makers, and overcoming the problems that currently affects the prior art connector.

### Summary of the invention

The idea of solution at the base of the present invention is that of providing a connector between a GIS platform, and more particularly the GIS platform of esri®, including geographical information and means for managing geographical information, and a BI platform, including statistical and analytical data and means for managing such data, wherein the BI platform further include means to query geographical information from said GIS platform and to geo-graphically display said geographical information, and wherein the geographical information displayed in the BI platform are taken from the GIS platform so that a change of the geographical information in the BI platform also change the geographical information stored in said GIS platform. In a preferred embodiment of the present invention, the BI platform is QlikView® of QlikTeck®.

According to this idea of solution, the technical problem above referred is solved by a connector for a BI platform, including analytical data and means for processing said analytical data, characterized by the fact that the connector is integrated in the BI platform and is adapted to integrate in the BI platform geographical information of a GIS platform, wherein the connector further integrate in the BI platform means of the GIS platform for processing the geographical information.

More particularly, the connector is adapted to link the analytical data of the BI platform to the integrated geographical information of the GIS platform.

The connector further including means to retrieve geographical information from the GIS platform, starting from a query for analytical data in the BI platform, wherein the geographical information retrieved are integrated in the BI platform to be processed directly within the BI platform with the means for processing.

On the other side, the connector include means to retrieve analytical data from the BI platform, starting from a query for geographical information in the GIS platform, wherein the analytical data retrieved are processed in the BI platform with the means for processing analytical data.

A processing of the geographical information integrated in the BI platform is adapted to trigger a corresponding processing of the analytical data in the BI platform. Vice versa, a processing of the analytical data in the BI platform is adapted to trigger a corresponding processing of the geographical information in the BI platform.

Advantageously, the connector completely integrates the two platforms because the geographical information represented as map(s) in the BI platform really corresponds to data stored in the GIS platform, and thus they are available near analytical data for decision makers, but can also be modified within the BI platform, for example editing the map, and such modification are immediately reported into the GIS platform, and more particularly into the GIS platform of esri®, i.e. changing the value of geographical information stored in such platform. More particularly, modification on geographical information is executed through the means for processing of the GIS platform.

More particularly, according to the idea of solution mentioned above, there is no conversion of data from the GIS platform format into the BI platform, i.e. no data conversion between the format of data stored in the esri® GIS platform and the format of data in the BI platform; the geographical information is directly displayed through a GIS tool within the BI platform. In this respect, a map is embedded as a GIS tool within a graphical interface of the BI platform and directly represents data stored in the GIS platform of esri®.

In other words, a map displayed on the BI platform, for instance on an interface of a client device, is a window of the GIS platform esri®, embedding data of the GIS platform esri® and functions for processing such data, wherein the functions are directly inherited from the GIS platform esri©.

The processing is executed when the BI platform, for instance through the interface on the client device, query geographical information to the GIS platform. The processing returns the map integrated in the BI platform. Thus, the map or image is drawn at the GIS platform side with the tools of esri® and not at BI platform side.

For instance, at time T0 the BI platform displays a predetermined map on the client device interface, at the BI platform side. The user may request a change in the map and the connector, which is integrated in the BI platform, intercepts the change and connect the GIS platform of esri®, i.e. an application server, to process a new map, with the means directly provided by the GIS platform. Once the new map is processed, it is directly displayed in a window on the client device.

Advantageously, no server or server application for implementing the converter are required between the BI platform and the GIS platform. On the contrary, the converted is integrated in the BI platform and open data and functions of the GIS platform directly inside the BI platform.

A great advantage of the connector according to the invention is that a (memory) size of an image or map transmitted from the application server to the BI platform is independent from a number of objects to be displayed in the image. Advantageously, according to the invention, a number of objects to the displayed in a map in the BI platform may correspond to a number of analytical or statistical data stored in a table of the BI platform. Another advantage is that the application server of esri® is used to make the rastering, i.e. to process the image, and another application server at the BI platform side is not requested.

On the contrary, the connectors according to the prior art, draw the maps or image at the client side, for instance through a browser of the client device interface, increasing the time to process the image and to display it on the screen proportionally to the number of object to be displayed. Indeed, drawing an image with a number of object corresponding to the number of analytical or statistical data in the BI table according to the prior art connector involves time not acceptable at the user side.

According to an aspect of the present invention, data in GIS platform, and more particularly in the GIS platform of esri®, are stored in one or more databases A and data in the BI platform are stored in one or more databases B, and records in the database A are linked to records in database B. A query on data of the BI platform, i.e. on database B, is executed also on data of the GIS platform of esri®, i.e. on database A, and the result of the query is represented not only with graphical tool of the BI platform (for instance with histograms) but also with graphical tool of the GIS platform of esri® (for instance maps) which are embedded in the BI platform. A graphical interface of the BI platform may include histograms or tables including statistical and analytical data and may also embed one or more maps for representing geographical information of the GIS platform of esri®; once the statistical data are queried through the tool of the BI platform, for example selecting a portion of the histogram, the histogram is updated with the selected data and also the map(s) is updated, giving an updated territorial representation of the data selected in the histogram or table. No transfer, duplication or data conversion between the two platforms is requested.

In the same way, according to the connector of the present invention, a selection of data on the map, for example zooming a specific area, not only updates the map with selected data and with a new graphical representation (map) of the territorial selected area, but also updates the data and their graphical representation on the histogram of the BI platform. This high integration gives an advanced tool for decision makers because the geographical representation of data is always and immediately integrated with statistical and analytical data proper of the BI platform.

More particularly, the databases A and B comprise tables wherein records are linked through records keys or identifiers. Through a selection in the database B of the BI platform not only records of the database B are retrieved but also records in the database A of the GIS platform, and more particularly in the databases of esri® platform, are retrieved, wherein each record of the database B is linked to a record in the database A.

Advantageously, a map may include more than one layer, i.e. it may include different representations or symbols for different kind of information on the map, and the selection on the BI platform may correspond to several selections of the maps, one for each layer. In the same way, a selection on a multilayer map, updates the map with the corresponding data on the layers and also the data of different layers or graphs in the BI platform.

According to the idea of solution given above, the problem is solved by a connector between a GIS (Geographical Information System) platform, more particularly the GIS platform of esri®, including geographical information and means for processing the geographical information, and a BI (Business Intelligence) platform, preferably QlikView® of QlikTeck®, including analytical data and means for processing the analytical data, wherein the connector is integrated in the BI platform and is adapted to link the geographical information in the GIS platform with the analytical data in the BI platform, the connector further including means to retrieve geographical information from said GIS platform starting from a query for analytical data in the BI platform and means for processing the geographical information within the BI platform. Said means for processing and for retrieving geographical information are provided and inherited from the GIS platform itself and integrated within the BI platform.

More particularly, the means for processing the geographical information includes an editor of the geographical information, the editor being adapted to save changes, made to the geographical information in the BI platform, directly within the GIS platform, and more particularly directly within the platform of esri®. The editor is connected to the means for processing the analytical data and is adapted to transmit changes made on geographical information to the means for processing the analytical data in the BI platform, wherein the means for processing the analytical data are adapted to apply the changes to the analytical data in the BI platform in connection with the changes to geographical information.

The editor is connected to the means for processing the analytical data and is adapted to receive from the means changes made to analytical data in the BI platform, wherein the means for editing the geographical information are adapted to apply the changes to the geographical information in the GIS platform in connection with the changes to geographical information.

The means for processing the geographical information within the BI platform includes a geo-processor of the geographical information, the geo-processor being adapted to process the geographical information in the BI platform with no data conversion of geographical information.

The means for processing the geographical information within the BI platform are adapted to start processing the geographical information when the analytical data within the BI platform are processed.

Means to retrieve analytical data from the BI platform starting from a query for geographical information in the GIS platform of esri® are further provided, wherein said means for processing the analytical data are adapted to process the analytical data retrieved.

The GIS platform, and more particularly the platform of esri®, includes at least one database A for storing the geographical information and the BI platform includes at least another database B for storing the analytical data, and the connector links records stored in the database A with records stored in the database B of the BI platform.

The connector is adapted to retrieve at least one record identification number or key from a query of analytical data in the BI platform and to query at least another record in the database of geographical information which is linked to the record identification number or key.

The connector is also adapted to retrieve at least one record identification number or key from a query of geographical information in the GIS platform, and more particularly the platform of esri®; and to query at least another record in the database of analytical data which is linked to the record identification number or key.

The problem referred above is also solved by a method to connect a GIS (Geographical Information System) platform, and more particularly the platform of esri®, including geographical information and means for processing the geographical information, and a BI (Business Intelligence) platform, including analytical data and means for processing the analytical data, characterized by -integrating in the BI platform a connector, -linking with said connector the geographical information in said GIS platform with the analytical data in the BI platform, -retrieving with the connector geographical information from said GIS platform, starting from a query for analytical data in the BI platform, and processing the geographical information directly within the BI platform.

The method integrates in the BI platform geographical information of the GIS platform and further integrates in the BI platform means of said GIS platform for processing the geographical information. More particularly, the method further comprises -retrieving analytical data from the BI platform, starting from a query for geographical information in the GIS platform, and more particularly the platform of esri®; and processing the analytical data retrieved in the BI platform. In an aspect of the invention, the method further process the geographical information with an editor, which save, directly within said GIS platform, changes made to the geographical information in the BI platform.

Further advantages and technical information of the connector and method for connecting platforms according to the invention are described here below with reference to some drawings, given only for exemplificative purpose and not limiting the scope of protection of the invention.

### Brief description of the drawings

Figure 1 is a diagram block schematically representing a connector between a GIS platform and a BI platform, according to the present invention.
Figure 2 is an interface of a BI platform including the connector of figure 1.
Figure 3 is another interface of the BI platform of figure 2.
Figure 4 is an embodiment of the connector of figure 1, with known BI platform (QlikView) and GIS platform (Esri ArcGIS).

### Detailed description

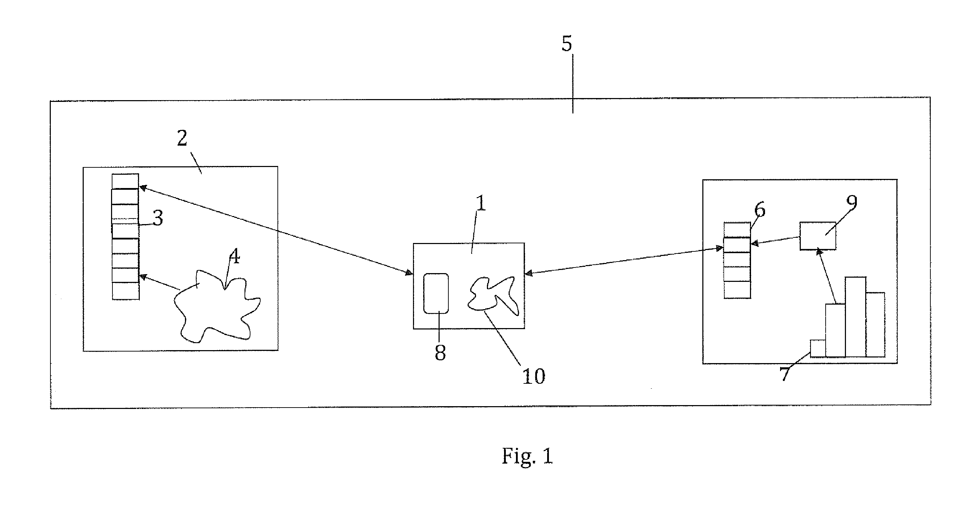

With reference to figure 1 is schematically represented a connector 1 between a GIS (Geographical Information System) platform 2, and more particularly with the GIS platform of esri, including geographical information 3 and means 4 for processing the geographical information 3, and a BI (Business Intelligence) platform 5, including analytical data 6 and means 7 for processing the analytical data 6.

The above mentioned GIS platform is specifically programmed to capture, store, manipulate, analyze, manage, and present all types of geographical data, and includes tools to create interactive queries, analyze spatial information, edit data in maps, presenting the results of all these operations to decision makers.

On the other hand, decision makers are supported in a different way by the BI platform, wherein data are represented, processed, edited and stored differently, for instance with charts, tables, isograms, not including a geographical association with maps or geo-processing means.

The BI platform and the GIS platforms are known applications, for instance QlikView® of QlikTeck® and ArcGIS of esri® respectively. The BI platform per se is a software product or module not embedding geographical information typical of the GIS platform and the GIS platform ArcGIS, on the other side, is a software product or module not embedding analytical or statistical data typical of the BI platform.

The connector according to the present invention is more particularly adapted to complete a BI platform, particularly but not exclusively inside QlikView® of QlikTeck®, with functions and information from ArcGIS of esri®, which is hereafter indicated as GIS platform.

According to the present invention, the connector 1 is integrated in the BI platform 5 and is adapted to link the geographical information 3 in the GIS platform 2, and more particularly in ARCGis of esri®, with the analytical data 6 in the BI platform 5. The link provides that geographical information which are loaded in the BI platform through the connector 1 and then changed/saved in the BI platform, are also directly saved in the GIS platform, and more particularly in ARCGis. More particularly, with reference number 2 in figure 1, is schematically represented a windows in the BI platform integrating functions and data of the GIS platform and not the entire GIS platform. In this respect, the functions in the window allow to load, display, edit and process geographical data directly stored in the database of the GIS platform.

More particularly, the connector 1 further includes means 8 to retrieve geographical information 3 from the GIS platform 2 (ARCGis) starting from a query 9 for analytical data 6 in the BI platform 5 and means 4 for processing the geographical information 3 retrieved within the BI platform 5.

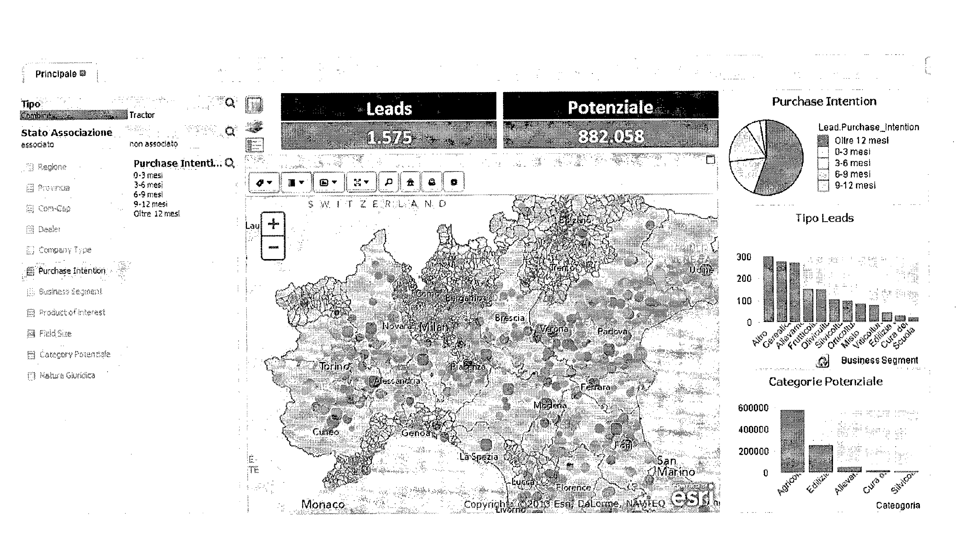

Figure 2 schematically represents an interface of the BI platform including the connector 1. More particularly, figure 2 relates to a graphical layout of the connector 1, which ultimately includes a software module or application. The BI platform 5 includes data, for instance a type of leads, a potential category, a purchase intention, for instance selected among a plurality of status of association available, comprising region, country, dealer, company type, business company, etc, and further includes means from querying data, in order to make analysis and statistics, for instance selecting purchase intention between 0-3 months or between 3-6 months, etc. When data are selected on the BI platform through said means for querying, the interface 11 of the BI platform is updated; for instance, when the purchase intention is selected between 0-3 months, the histograms or diagrams on the right side, type of leads, purchase intention and potential category are updated.

Advantageously, when a selection is made with the means for querying data in the BI platform, the connector 1 query to the GIS platform 2, and more particularly to ARCGis, the linked geographical information and display on said means 4 for processing the geographical information 3, for instance on a map, the geographical information retrieved.

In this respect, when a status of association in the BI platform is selected, for instance the purchase intention, a map integrated within the BI platform is updated accordingly, including graphical representation of geographical information which is associated to the diagram or histograms of the BI platform, i.e. to data of the BI platform.

For instance, without limiting the possible graphical association, each circular area on the map is colored with one color selected among a plurality of possible colors (for instance five color), each color corresponding to an information of the BI platform, for example to a potential category of product represented in the diagram in the right bottom side on the interface, including agriculture, farm animals, etc. Moreover, a size of the circular area is proportional to a number representative of the purchase intention in the BI platform.

Thus, if in or around a first geographical area the purchase intention is higher than in a second geographical area, the map represents around the first geographical area a circle (or a different graphical element, such as a square) having a size greater than a size of a second circle represented around the second geographical area. The color of the circle associated to each area, instead, represents the different potential category of products which might be purchased.

In other words, multiple information available in the BI platform size, corresponding to number, products or other analytical information, are associated to a graphical representation in the map, so that the decision maker may find immediately a geographical representation of the analytical data on the map.

In this respect, the map displayed is processed with tools of ARCGis and is displayed, for instance to an interface on a client device including the means for querying data. Advantageously, the image is immediately loaded on the client interface, i.e. at the BI platform side, since it has been previously processed by the application server of ARCGIS. Indeed, the memory size of the map, as well as the waiting time to have the map displayed on the client device at BI platform side, does not depend from a complexity of the map, since ARCGis is adapted to manage complex processing in few time and to return a corresponding image of predetermined size, while no duplication of data or processing on duplicated data is required.

Thus, a map including several objects, for instance an object for each data in a table at BI platform side, may be processed and returned from the ARCGis immediately.

The geo-graphical representation in the connector 1 corresponds to a first layer of the map. Advantageously, according to the connector of the invention, more information may be reported in different layers on the map. Different layers are processed at ARCGis side and thus immediately returned as an image to the BI platform side.

On the other hand, the means 4 for processing the geographical information 3 includes an editor of the geographical information 3, to change information on the map and to save changes directly within the GIS platform 2, and more particularly to save in ARCGis. A change made of a value x on the map 10 is also reported on value(s) y in the BI platform, if the value changed x is linked to value(s) to be changed in the BI platform. For instance, the editor may provide a function to group two or more sub-areas of a map or to divide an area of the map in two or more sub-areas. The means 7 in the BI platform also provide function for editing data, i.e. analytical data and statistical data.

The editor of the connector is connected to the means 7 for processing the analytical data 6 and is adapted to transmit changes made on geographical information 3, for instance the grouping of sub-areas or the division of an area, to the means 7 for processing the analytical data 6 in the BI platform 5. The means 7 for processing the analytical data 6 apply the changes to the analytical data 6 in the BI platform 5, for instance deleting one raw in the table 12 (grouping of two sub-area) or adding one row (division of two areas) after a change to geographical information 3.

On the other hand, the editor of the connector is connected to the means 7 for processing the analytical data 6 and is adapted to receive from the means 7 the changes made to analytical data 6 in the BI platform 5. The editor of geographical information 3 are adapted to apply the changes to the geographical information 3 (grouping to sub-areas in the map) in the GIS platform 2, and particularly in ARCGis, in connection with the changes to geographical information 3 on the BI platform 5.

The means 10 for processing the geographical information 3 within the BI platform 5 includes a geo-processor, for instance a zooming panel for increasing or decreasing a scale of the map. The geo-processor process the geographical information 3, i.e. zoom in or zoom out directly linking the geographical information in the GIS platform, i.e. taking in input geo-graphical coordinates stored in a database of the GIS platform ARCGis, without data conversion. In other words, the geo-processor request to the application server in ARCGis to process a zoom in or zoom out on geographical information and receives from the application server the processed image immediately to be displayed in the BI platform.

Advantageously, according to the connector of the invention, geo-processing in the BI platform is really available with a high performance. In this respect, once geo-graphical information are retrieved from the GIS platform, the rendering of a first map is executed in the application server ARCGis to draw it in the interface 11 but a subsequent geo-processing, for example showing the map in a different scale, does not require a rendering at the BI platform side but a processing of the first map into a second map in the application server at the ARCGis side.

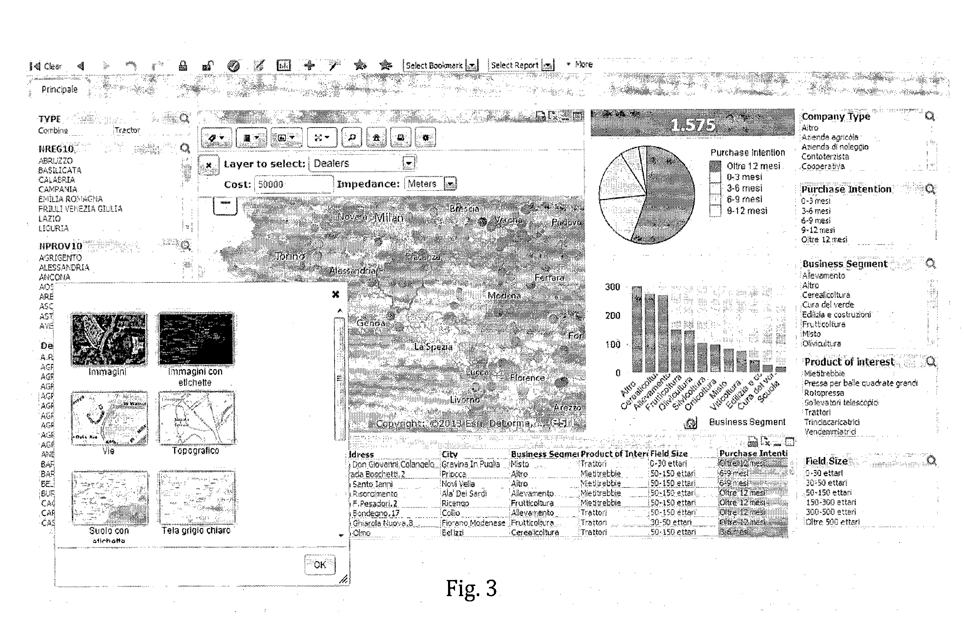

Figure 3 is the interface of the BI platform representing different data. In this case, the means 10 for processing the geographical information includes a map and further representation, including images, images with labels, map with addresses, topographical view, terrain view with labels, terrain view in grey scale, etc.

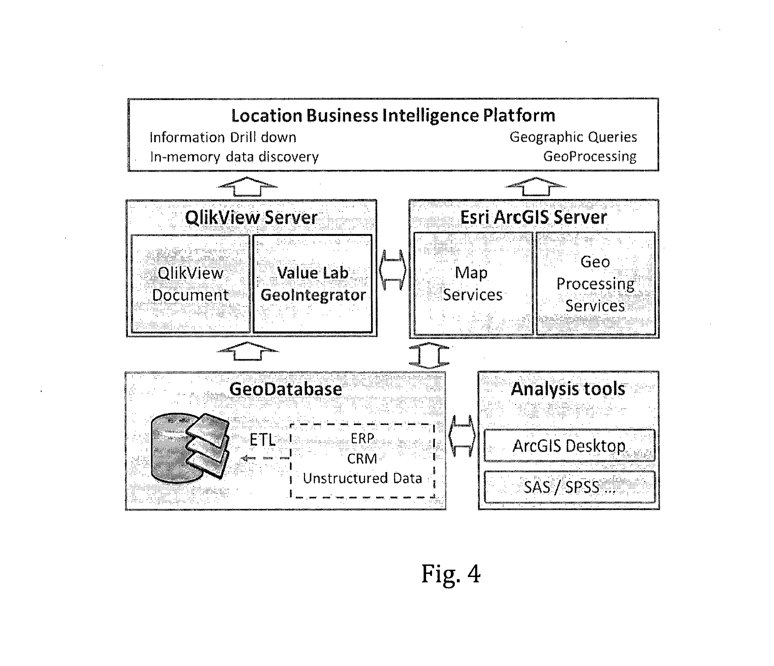

Figure 4 schematically represents an implementation of the connector, indicated with Value Lab GeoIntegrator, between the BI platform QlikView® of QlikTeck® and the GIS platform ArcGIS of esri® respectively. The connector is integrated in QlikView®, and more particularly in a server of QlikView®. A server of esri ArcGIS exports map services and geo-processing services. The connector is interfaced with the map services of esri ArcGIS and link such service or means and the geographical information into QlikView®.

Advantageously, the connector according to the invention allows a two-way synchronization between dashboard objects (tables, graphics, etc.) of the BI platform and the map component of the GIS platform, and enables extension of an associative browsing, which is for example implemented in Qlikview, to geographic data, through the direct connection to datawarehouses, with no conversion or replication.

The synchronization overcomes limitations on the quantity of geographic data that can be handled for display or analysis. Indeed, since the connector combines the two platforms, allows creation of true Location Intelligence systems based on a browsing logic which is both associative and geospatial. In this respect, a Location Intelligence system is a system for organizing and studying phenomena through geographic relationships; combining geographic and location-related data with other business data, organizations can gain critical insights, make better decisions and optimize important processes and applications. For instance, Location Intelligence offers organizations opportunities to streamline a business process and customer relationships to improve performance and results. Location Intelligence tools leverage a variety of data sources including aerial maps, geographic information systems (GIS), consumer demographics as well as a user's own customer records. More particularly, Location Intelligence is often used to describe tools and data employed to geographically "map" information, to transform large amounts of data into color-coded visual representations that make it easy to see trends and generate meaningful intelligence.

## Claims

1. Connector (1) for a BI (Business Intelligence) platform (5) including analytical data (6) and means (7) for processing said analytical data (6), **characterized by** the fact that said connector (1) is integrated in the BI platform (5) and is adapted to integrate in the BI platform (5) geographical information (3) of a GIS (Geographical Information System) platform (2), wherein the connector (1) further integrate in the BI platform (5) means (4) of said GIS platform (2) for processing the geographical information (3).

2. Connector (1) according to claim 1 **characterized by** being adapted to link the analytical data (6) of the BI platform (5) to the integrated geographical information (3) of the GIS platform (2)

3. Connector (1) according to claim 2 **characterized by** including means (8) to retrieve geographical information (3) from the GIS platform (2) starting from a query (9) for analytical data (6) in the BI platform (5), wherein the geographical information (3) retrieved are integrated in the BI platform (5) to be processed directly within the BI platform (5) with said means (4) for processing.

4. Connector (1) according to claim 2 **characterized by** including means (10) to retrieve analytical data (6) from the BI platform (5) starting from a query (11) for geographical information (3) in the GIS platform (2), wherein the analytical data (6) retrieved are processed in the BI platform (5) with said means (7) for processing.

5. Connector (1) according to claims 3 or 4 **characterized by** the fact that a processing of the geographical information (3) integrated in the BI platform (5) is adapted to trigger a corresponding processing of the analytical data (6) in the BI platform (5) or a processing of the analytical data (6) in the BI platform (5) is adapted to trigger a corresponding processing of the geographical information (3) in the BI platform (5).

6. Connector (1) according to claim 1, **characterized by** the fact that said means (4) for processing the geographical information (3) integrated in the BI platform (5) includes an editor of said geographical information (3), the editor being adapted to save changes to the geographical information (3) in the BI platform (5), directly within the GIS platform (2).

7. Connector (1) according to claim 6, **characterized by** the fact that said editor is connected to said means (7) for processing the analytical data (6) and is adapted to transmit changes made on geographical information (3) to said means (7) for processing the analytical data (6) in the BI platform (5), wherein said means (7) for processing the analytical data (6) are adapted to apply said changes to the analytical data (6) in the BI platform (5) in connection with said changes to geographical information (3).

8. Connector (1) according to claim 6, **characterized by** the fact that said editor is connected to said means (7) for processing the analytical data (6) and is adapted to receive from said means (7) changes made to analytical data (6) in the BI platform (5), wherein said means (4) for editing the geographical information (3) are adapted to apply said changes to the geographical information (3) in the GIS platform (2) in connection with said changes to analytical data (6).

9. Connector according to claim 1, **characterized by** the fact that said means (4) for processing the geographical information (3) integrated in the BI platform (5) include a geo-processor of said geographical information (3), the geo-processor being adapted to process the geographical information (3) in the BI platform (5) with no data conversion of geographical information (3).

10. Connector according to claim 1, **characterized by** the fact that said GIS platform is the GIS platform of esri®, and more particularly ARCGis.

11. Connector (1) according to claim 1, wherein the GIS platform (2) includes at least one database for storing the geographical information (3) and the BI platform includes at least another database for storing the analytical data, and wherein the connector links records stored in the database of the GIS platform with records stored in the database of the BI platform.

12. Connector (1) according to claim 11 adapted to retrieve at least one record identification number or key (62) from a query of analytical data (6) in the BI platform (5) and to query at least another record (31) in the database of geographical information (3) which is linked to said record identification number or key (62).

13. Connector (1) according to claim 11 adapted to retrieve at least one record identification number or key (32) from a query of geographical information (3) in the GIS platform (2) and to query at least another record (61) in the database of analytical data (6) which is linked to said record identification number or key (32).

14. Method for connecting (1) a BI (Business Intelligence) platform (5) including analytical data (6) and means (7) for processing said analytical data (6) and a GIS (Geographical Information System) platform (2), **characterized by** integrating in the BI platform (5) geographical information (3) of the GIS (Geographical Information System) platform (2) and further integrate in the BI platform (5) means (4) of said GIS platform (2) for processing the geographical information (3).
